**Europäisches Patentamt**

**European Patent Office**

**Office européen des brevets**

(19)

(11) Veröffentlichungsnummer : **0 414 781 B1**

(12) **EUROPÄISCHE PATENTSCHRIFT**

(45) Veröffentlichungstag der Patentschrift :
30.10.91 Patentblatt 91/44

(51) Int. Cl.$^5$ : **F02B 37/00, F02B 37/12**

(21) Anmeldenummer : 89906073.5

(22) Anmeldetag : 18.05.89

(86) Internationale Anmeldenummer :
PCT/EP89/00545

(87) Internationale Veröffentlichungsnummer :
WO 89/11585 30.11.89 Gazette 89/28

(54) **MEHRZYLINDER-BRENNKRAFTMASCHINE.**

(30) Priorität : 20.05.88 DE 3817246

(43) Veröffentlichungstag der Anmeldung :
06.03.91 Patentblatt 91/10

(45) Bekanntmachung des Hinweises auf die
Patenterteilung :
30.10.91 Patentblatt 91/44

(84) Benannte Vertragsstaaten :
DE FR GB

(56) Entgegenhaltungen :
DE-C- 3 623 540
US-A- 4 669 269
Patent Abstracts of Japan, Vol,10,No.299
(M-524)(2355) 11 October 1986
Patent Abstracts of Japan, Vol.10,-
No.6,(M-445)(2063) 11 January 1986

(56) Entgegenhaltungen :
Patent Abstracts of Japan, Vol.9.No.252
(M-420)(1975) 09 October 1985
Patent Abstracts of Japan, Vol.11, No.266
(M-620)(2713) 28 August 1987
Patent Abstracts of Japan, Vol.8,
No.263(M-342)(1700) 04 December 1984

(73) Patentinhaber : AUDI AG
Auto-Union-Strasse 1 Postfach 220
W-8070 Ingolstadt (DE)

(72) Erfinder : GANZ, Michael
Helmbundstra e 50
W-7106 Neuenstadt (DE)
Erfinder : BLUHM, Kurt
Friedrichstra e 9
W-7107 Neckarsulm (DE)

(74) Vertreter : Speidel, Eberhardt et al
Postfach 1320 Waldpromenade 26
W-8035 Gauting (DE)

**Beschreibung**

Die Erfindung bezieht sich auf eine Mehrzylinder-Brennkraftmaschine gemäß dem Oberbegriff des Anspruchs 1.

Bei einer bekannten Brennkraftmaschine dieser Art (DE-PS 36 23 540) ist die Ansteuerung des Abblaseventils und des Turbinen-Zuschaltventils einer zustandsgrößenabhängigen Vorsteuerung unterworfen, der eine wenigstens saugrohrdruckabhängige Regelung überlagert ist. Als Zustandsgrößen zur Vorsteuerung werden dabei die Drehzahl und die Stellung der Drosselklappe der Brennkraftmaschine herangezogen. Dadurch kann der Einsatz des zuschaltbaren Abgasturboladers optimiert werden, allerdings mit einem erheblichen Steuerungs- und Regelungsaufwand, da für die Vorsteuerung Kennfelder für die Drehzahl und den Drosselklappenwinkel und für die saugrohrdruckabhängige Regelung weitere Kennfelder erforderlich sind, die empirisch ermittelt werden müssen.

Der Erfindung liegt die Aufgabe zugrunde, eine Mehrzylinder-Brennkraftmaschine der gattungsgemäßen Art zu schaffen, bei der ein optimales Zu- und Abschalten des zweiten Abgasturboladers mit einem wesentlich geringeren Aufwand erreicht wird.

Diese Aufgabe wird erfindungsgemäß durch die im Kennzeichen des Anspruchs 1 angegebenen Merkmale gelöst.

Da der Luftmassenstrom nahezu identisch mit der Abgasmenge ist, wird bei Erreichen eines bestimmten Luftmassenstromes, der der Durchsatzgrenze des ersten Laders entspricht, der zweite Abgasturbolader zugeschaltet. In der Praxis wird empirisch bei Vollast und quasistationärem Betriebszustand der Luftmassenstrom ermittelt, bei dem das Zuschalten des zweiten Abgasturboladers keine Drehmomenterhöhung zur Folge hat, also ruckfrei erfolgt. Wenn dieser im folgenden als System-Luftmassenstrom $m_s$ bezeichnete Wert erreicht ist, wird der zweite Abgasturbolader zugeschaltet, indem das Turbinen-Zuschaltventil voll geöffnet wird. Das Verdichter-Zuschaltventil öffnet sich dann selbsttätig. Bis zu diesem Zeitpunkt ist das Abblaseventil blockiert und das Turbinen-Zuschaltventil übernimmt, gesteuert in Abhängigkeit vom Ladedruck, die Aufgabe des Abblaseventils für die Turbine des ersten Abgasturboladers. Nach dem Zuschalten des zweiten Abgasturboladers wird der Ladedruck in üblicher Weise von dem beiden Abgasturboladern gemeinsamen Abblaseventil begrenzt. Sinkt der Luftmassenstrom unter den Wert $m_s$, so wird das gemeinsame Abblaseventil wieder blockiert und das Turbinen-Zuschaltventil entsprechend dem anliegenden Ladedruck mehr oder weniger geschlossen, so daß die Brennkraftmaschine wieder in den Einlader-Betrieb übergeht. Durch die Steuerung/Regelung der Abgasturboanlage im Übergangsbereich von Einlader- auf Zweilader-Betrieb in Abhängigkeit von nur einer Kenngröße, nämlich dem Luftmassenstrom, ist der Steuerungs- und Regelungsaufwand, verglichen mit der bekannten Ausführung, äußerst gering, zumal bei Brennkraftmaschinen, die mit einer Kraftstoff-Einspritzanlage ausgestattet sind, die mit Luftmassenmessung arbeitet die erforderliche Steuergröße bereits vorhanden ist.

Zur Komfortverbesserung, d.h., zur Erzielung eines möglichst ruckfreien Überganges beim Zu- und Abschalten des zweiten Abgasturboladers in allen Betriebszuständen, kann es zweckmäßig sein, die vom Luftmassenstrom abhängigen Ansteuerung des Abblaseventils und des Turbinen-Zuschaltventils drehzahl- bzw. beschleunigungsabhängig zu korrigieren. Dabei wird durch Drehzahlvergleich in kurzen Zeitintervallen die Größe der Beschleunigung festgestellt und der Wert $m_s$ korrigiert, derart, daß bei schnellem Beschleunigen das Zuschalten früher, d.h., bei einem unter dem Wert $m_s$ liegenden Luftmassenstrom, eingeleitet wird als bei einem langsamen Beschleunigen. Da der Zuschaltvorgang nahezu zeitkonstant ist, wird durch diese Veränderung des Zeitpunktes des Zuschaltens die Zuschaltung in dem Moment durchgeführt, in dem der Systemwert $m_s$, bei dem ruckfreier Übergang erfolgt, erreicht ist.

Es ist auch möglich, der vom Luftmassenstrom abhängigen Ansteuerung neben oder zusätzlich zu der drehzahlabhängigen Korrektur eine von der Drosselklappenstellung abhängigen Korrektur zu überlagern, um einen besonders wirtschaftlichen Betrieb zu erreichen. Dabei wird der Wert $m_s$ derart korrigiert, daß der zweite Abgasturbolader bei kleinen Drosselklappenwinkeln früher zugeschaltet wird als bei großen Drosselklappenwinkeln. Es arbeiten dann im Teillastbetrieb beide Abgasturbolader, wodurch unter anderem der Abgasgegendruck verringert wird und der Kraftstoffverbrauch gesenkt werden kann.

Die Erfindung wird vorzugsweise bei einer Brennkraftmaschine mit einer Kraftstoff-Einspritzanlage eingesetzt, die mit Messung des Luftmassenstroms arbeitet. Die Messung des Luftmassenstroms erfolgt dabei in der Ansaugleitung vor den beiden Verdichtern. Um beim Einlader-Betrieb und mehr oder weniger geöffnetem Turbinen-Zuschaltventil eine fehlerhafte Kraftstoffzumessung zu vermeiden, wird die in diesem Fall von dem Verdichter des zweiten Abgasturboladers geförderte Luft, die wegen des Verdichter-Zuschaltventils nicht in das Sammelsaugrohr gelangen kann, der Saugseite des ersten Verdichters zugeführt. Im Zweilader-Betrieb wird diese Verbindung durch ein Umluftventil geschlossen, so daß sich in der Ladeluftleitung des zweiten Verdichters ein Druck aufbauen kann, der das Verdichter-Zuschaltventil öffnet. Die Ansteuerung dieses Umluftventils erfolgt ebenfalls in Abhängigkeit von dem Luftmassenstrom, bevor das Zuschaltventil geöffnet wird.

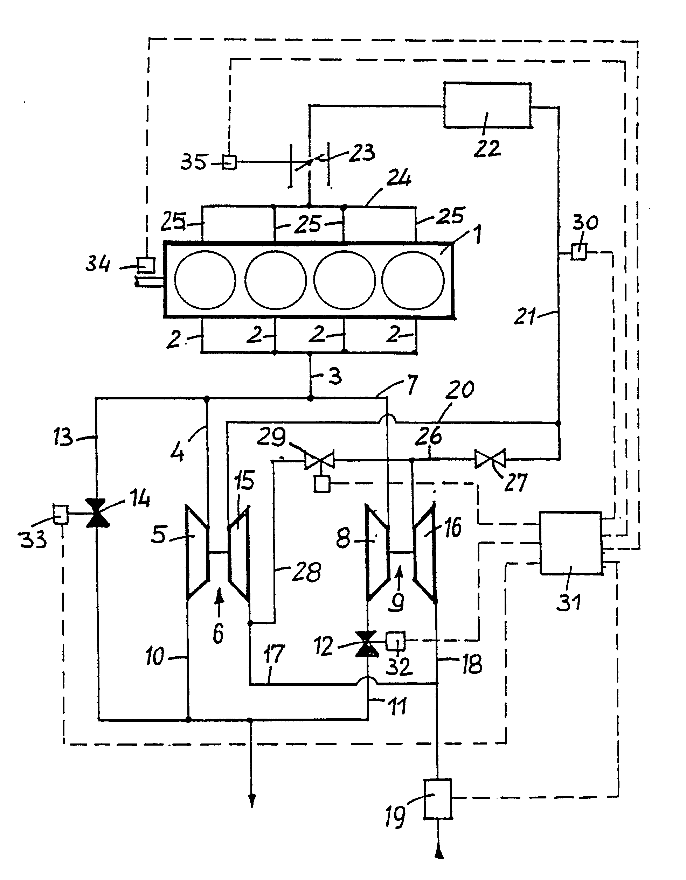

Ein Ausführungsbeispiel der Erfindung wird im folgenden unter Bezugnahme auf die Zeichnung beschrieben, die eine schematische Darstellung einer Mehrzylinder-Brennkraftmaschine mit zwei Abgasturboladern zeigt.

Die Zeichnung zeigt eine Brennkraftmaschine 1 mit beispielsweise vier Zylindern, deren Abgasrohre 2 in ein gemeinsames Abgassammelrohr 3 münden, von dem eine erste Abgasleitung 4 zu einer Turbine 5 eines ersten Abgasturboladers 6 und eine zweite Abgasleitung 7 zu einer Turbine 8 eines zweiten Abgasturboladers 9 führt. Die Abgasleitungen 10 und 11 der beiden Turbinen 5 und 8 können mit einer gemeinsamen Katalysator- und Schalldämpferanlage oder auch mit getrennten derartigen Anlagen verbunden sein.

In der Abgasleitung 11 der Turbine 8 ist ein Turbinen-Zuschaltventil 12 angeordnet, (das auch in der Abgasleitung 7 vorgesehen werden könnte). Zwischen dem Abgassammelrohr 3 und den Abgasleitungen 10, 11 ist eine Bypassleitung 13 mit einem Abblaseventil 14 angeordnet. Das Turbinen-Zuschaltventil 12 und das Abblaseventil 14 werden in später noch zu beschreibender Weise angesteuert und sind im nicht angesteuerten Zustand geschlossen.

Die von den Turbinen 5 und 8 der Abgasturbolader 6 und 9 angetriebenen Verdichter 15 und 16 sind mit ihren Saugleitungen 17 und 18 an eine Ansaugleitung mit einem Luftmassenmesser 19 angeschlossen, der Bestandteil einer nicht dargestellten Kraftstoff-Einspritzanlage ist. Die Ladeluftleitung 20 des Verdichters 15 ist über eine Leitung 21, in der ein Ladeluftkühler 22 sowie ein Leistungssteuerorgan in Form einer Drosselklappe 23 angeordnet ist, mit dem Sammelsaugrohr 24 verbunden, von dem die Einzelsaugrohre 25 zu den einzelnen Zylindern der Brennkraftmaschine 1 ausgehen. Die Ladeluftleitung 26 des Verdichters 16 ist über ein Verdichter-Zuschaltventil 27 mit der Leitung 21 und über eine Umluftleitung 28 mit einem Umluftventil 29 mit der Ansaugleitung 17 des Verdichters 15 verbunden. Das Ventil 27 ist so ausgebildet, das es selbsttätig öffnet, wenn der Druck in der Ladeluftleitung 26 den Druck in der Leitung 21 erreicht hat. Es kann ein Rückschlagventil sein oder auch ein pneumatisches Ventil sein, das bei Druckgleichheit in den Leitungen 26 und 21 öffnet. Das Umluftventil 29 ist im Einlader-Betrieb geöffnet und wird beim Übergang auf Zweilader-Betrieb geschlossen, wie dies im folgenden näher erläutert wird.

Die Betriebsweise der dargestellten Anlage ist folgende:

Im Einlader-Betrieb ist das Abblaseventil 14 geschlossen und das Umluftventil 29 geöffnet und der Ladedruck in der Leitung 21 steuert das Turbinen-Zuschaltventil 12, das im Einlader-Betrieb als Abblaseventil für die Turbine 5 dient, derart, daß ein bestimmter Ladedruck nicht überschritten wird. Wird dabei das Turbinen-Zuschaltventil 12 geöffnet, so wird die Turbine 8 angetrieben, die ihrerseits den Verdichter 16 antreibt, und die von diesem geförderte Luft gelangt über das offene Umluftventil 29 auf die Saugseite des Verdichters 15. Die ladedruckabhängige Ansteuerung des Turbinen-Zuschaltventils 12 erfolgt mittels eines auf den Ladedruck ansprechenden Drucksensors 30, der ein entsprechendes Signal an ein Steuergerät 31 gibt, welches wiederum ein pneumatisches oder elektrisches Steuerglied 32 des Turbinen-Zuschaltventils 12 betätigt. Das Abblaseventil 14, dessen elektrisches oder pneumatisches Steuerglied 33 ebenfalls von dem Steuergerät 31 gesteuert ist, ist geschlossen.

Das Steuergerät 31 erhält von dem Luftmassenmesser 19 ein vom angesaugten Luftmassenstrom abhängiges Signal. Wenn der Luftmassenstrom einen vorbestimmten, empirisch festgelegten Wert $m_s$ erreicht, wird durch das Steuergerät 31 das Umluftventil 29 geschlossen, das Turbinen-Zuschaltventil 12 geöffnet und das Abblaseventil 14 in Abhängigkeit vom Saugrohrdruck, also vom Signal des Sensors 30, so gesteuert, daß ein bestimmter Ladedruck nicht überschritten wird.

Der Umschaltpunkt, d.h. die Größe $m_s$ des Luftmassenstroms, bei dem das Umschalten vom Einlader- auf Zweiladerbetrieb erfolgt, wird empirisch ermittelt und ist dadurch gekennzeichnet, daß bei Vollast, also bei voll geöffneter Drosselklappe 23 im quasi-stationären Betrieb, beim Zuschalten des zweiten Abgasturboladers 9 kein merklicher Drehmomentanstieg erfolgt. Da im Betrieb eines Kraftfahrzeuges die Beschleunigung stark wechselt, der Zuschaltvorgang jedoch im wesentlichen zeitkonstant ist, ist es zur Erzielung eines ruckfreien Überganges von Einlader- auf Zweiladerbetrieb erforderlich, den als Steuergröße verwendeten Wert $m_s$ entsprechend der auftretenden Beschleunigung durch ein Korrekturglied $\Delta m_b$ zu verändern, und zwar in der Weise, daß bei starker Beschleunigung das Umschalten auf Zweilader-Betrieb früher eingeleitet wird als bei langsamer Beschleunigung. Zu diesem Zweck erhält das Steuergerät 31 von einem die Drehzahl der Brennkraftmaschine 1 feststellenden Sensor 34 Drehzahlsignale, die in kurzen zeitlichen Abständen miteinander verglichen werden, wodurch der Grad der Beschleunigung festgestellt werden kann. In dem Steuergerät 31 wird damit der Korrekturfaktor $\Delta m_b$ ermittelt, um den der Wert $m_s$ verringert werden muß, um den Wert m des Luftmassenstroms zu bestimmen, bei welchem das Umschalten auf Zweilader-Betrieb zu erfolgen hat, um einen ruckfreien Übergang zu erreichen. Somit ist

$$m = m_s - \Delta m_b.$$

Bekanntlich ist der Zweilader-Betrieb u.a. wegen des geringeren Abgasgegendrucks wirtschaftlicher als der Einlader-Betrieb. Daher ist es in wirtschaftlicher Hinsicht vorteilhaft, wenn die Zuschaltung des zweiten Abgasturboladers bei kleinem Drosselklappenwinkel früher erfolgt als bei großen Drosselklappenwinkeln. Zu diesem Zweck ist ein Drosselklappensensor 35 vorgesehen, der dem Steuergerät 31 ein von der Drosselklappenstellung abhängiges Signal gibt. In dem Steuergerät 31 wird nun ein Korrekturglied $\Delta m_d$ gebildet, das umso größer ist, je kleiner der Drosselklappenwinkel ist. Das Umschalten von Einlader- auf Zweilader-Betrieb erfolgt somit dann, wenn der Luftmassenmesser 19 einen Luftmassenstrom m ermittelt, der durch die Gleichung

$$m = m_a - \Delta m_b - \Delta m_d$$

bestimmt ist.

Der Steuer- und Regelaufwand für die dargestellte Abgasturbolader-Anlage ist äußerst gering, da im Einlader-Betrieb nur das Turbinen-Zuschaltventil 12 und im Zweilader-Betrieb nur das Abblaseventil 14 jeweils vom Ladedruck gesteuert wird und für den Übergang vom Einlader auf Zweilader-Betrieb als Steuergröße nur der Luftmassenstrom verwendet wird, der bei bekannten Kraftstoff-Einspritzanlagen als Grundgröße für die Kraftstoffzumessung bereits vorliegt. Erreicht dieser Massenstrom einen Wert, der in dem Steuergerät durch Subtraktion von beschleunigungs- und drosselklappenwinkel-abhängigen Korrekturfaktoren von dem einmal empirisch festgelegten Sollwert $m_a$ ermittelt wurde, so wird der Umschaltvorgang eingeleitet.

## Patentansprüche

1. Mehrzylinder-Brennkraftmaschine mit zwei jeweils aus einer Turbine (5 bzw. 8) und einem Verdichter (15 bzw. 16) bestehenden Abgasturboladern (6, 9), deren Verdichter über gesonderte Ladeluftleitungen (20, 26) an ein gemeinsames Sammelsaugrohr (24) angeschlossen und deren Turbinen in von einer Abgassammelleitung (3) ausgehende, gesonderte Abgasleitungen (4, 7) eingebaut sind, wobei ein Abgasturbolader (9) während des Betriebes der Brennkraftmaschine zum anderen Abgasturbolader (5) zuschaltbar ist und in einer die Turbinen beider Abgasturbolader umgehenden Bypaßleitung (13) ein steuerbares Abblaseventil (14) und in der Abgasleitung (11) der Turbine (8) des zuschaltbaren Abgasturboladers (9) ein steuerbares Turbinen-Zuschaltventil (12) angeordnet ist, nach dessen Öffnen sich ein in die Ladeluftleitung (26) des Verdichters (16) des zuschaltbaren Abgasturboladers (9) eingesetztes Verdichter-Zuschaltventil (27) durch den sich in dieser Ladeluftleitung aufbauenden Druck öffnen kann, wobei das Abblaseventil (14) und das Turbinen-Zuschaltventil (12) in Abhängigkeit von durch Sensoren (19, 30, 34, 35) erfaßten Zustandsgrößen der Brennkraftmaschine durch ein elektronisches Steuergerät (31) derart steuerbar sind, daß im Einladerbetrieb das Abblaseventil (14) geschlossen und das Turbinen-Zuschaltventil (12) einer ladedruckabhängigen Regelung unterworfen ist und im Zweiladerbetrieb das Turbinen-Zuschaltventil (12) geöffnet und das Abblaseventil (14) einer ladedruckabhängigen Regelung unterworfen ist, wobei ein gemessener Istwert (m) mit einem korrigierten Sollwert verglichen, und der zweite Lader entsprechend zu-oder abgeschaltet wird, dadurch gekennzeichnet, daß

    a) ein Sensor (19) zum Messen des der Brennkraftmaschine zugeführten Luftmassenstromes (Istwert m) vorgesehen ist,

    b) in dem Steuergerät (31) als Festwert ein empirisch ermittelter Sollwert ($m_a$) des Luftmassenstromes, bei dem die Umschaltung von Einlader- auf Zweiladerbetrieb und umgekehrt zu erfolgen hat, gespeichert ist,

    c) der Sollwert ($m_a$) durch eine ersten, beschleunigungsabhängigen Faktor ($\Delta m_b$) und eine zweiten, vom Drosselklappenwinkel abhängigen Faktor ($\Delta m_d$) korrigiert, und

    d) der zweite Lader (9) zugeschaltet wird, wenn der gemessene Istwert den korrigierten Sollwert überschreitet, und abgeschaltet wird, wenn der gemessene Istwert den korrigierten Sollwert unterschreitet.

2. Brennkraftmaschine nach Anspruch 1, dadurch gekennzeichnet, daß die Ladedruckleitung (26) des Verdichters (16) des zuschaltbaren Laders (9) mit der Saugseite des anderen Verdichters (5) über ein Umluftventil (29) verbunden ist, das von dem Steuergerät (31) so angesteuert ist, daß es beim Übergang vom Einlader- auf Zweiladerbetrieb geschlossen ist.

## Claims

1. Multicylinder internal-combustion engine with two exhaust-gas turbochargers (6, 9), which each consist of a turbine (5 or 8) and a compressor (15 or 16), the compressors of which are connected by separate charge-air pipelines (20, 26) to a common collective manifold (24) and the turbines of which are installed in separate exhaust-gas pipelines (4, 7) which start out from an exhaust-gas manifold (3), whereby one turbo-charger (9) can be added to the other turbocharger (5) during the operation of the engine and, in a by-pass pipeline (13) which bypasses the turbines of the two turbochargers, a controllable blow-off valve (14) is disposed and, in the exaust-gas pipeline (11) of the turbine (8) of the exaust-gas turbo-charger (9) that can be added, a controllable turbine connecting valve (12) is disposed, after the opening of which a compressor connecting valve (27) inserted in the charge-air pipeline (26) of the compressor (16) of the exhaust-gas turbocharger (9) that can be added, can open up due to the pressure building up in this charge-air pipeline, the blow-off valve (14) and the turbine connecting valve (12) being controllable by an electronic device (31) as a function of the physical parameters of the engine detected by sensors (19, 30, 14, 35) in such a way that, in the single-charger mode, the blow-off valve (14) is closed and the turbine connecting valve (12) is subjected to a pressure-dependent adjustment and, in the double charger mode, the turbine connecting valve (12) is opened and the blow-off valve (14) is subjected to a charger pressure-dependent adjustment, a measured actual value (m) being compared with a corrected target value and the second charger being turned on or off appropriately, characterized in that

    a) a sensor (19) is provided to measure the air flow rate (actual valve = m) that is supplied to the internal-combustion engine,

    b) in the control device (31) an empirically determined target value ($m_s$) of the air flow rate, at which there is to be a switch-over from a single-charger to a double-charger operation and the reverse, is stored as fixed value,

    c) the target value ($m_s$) is corrected by a first, acceleration-dependent factor ($\Delta m_b$) and a second, throttle angle-dependent factor ($m_d$) and

    d) the second charger (9) is added when the measured actual value exceeds the corrected target value, and is switched off when the measured actual value falls below the corrected target value.

2. Internal combustion engine according to claim 1, characterized in that the charge-air pipeline (26) of the compressor (16) of the charger (9) which can be added is connected to the suction side of the other compressor (5) by way of a circulating-air valve (29), which is activated by the control device (31) in such a manner, that it is closed during the transition from the single-charger to the double-charger operation.

## Revendications

1. Moteur multicylindre à combustion interne, comprenant deux turbosoufflantes à gaz d'échappement (6, 9) constituées chacune d'une turbine (5 et respectivement 8) et d'un compresseur (15 et respectivement 16), dont les compresseurs sont raccordés par l'intermédiaire de conduites d'air de suralimentation séparées (20, 26) à un collecteur d'aspiration commun (24) et dont les turbines sont montées dans des conduites de gaz d'échappement séparées (4, 7) qui partent d'un collecteur de gaz d'échappement (3), une turbosoufflante à gaz d'échappement (9) pouvant être couplée pendant le fonctionnement du moteur à combustion interne avec l'autre turbosoufflante à gaz d'échappement (5), et une conduite de dérivation (13) contournant les turbines des deux turbosoufflantes à gaz d'échappement étant équipée d'une soupape d'évacuation (14) commandable, alors que dans la conduite de gaz d'échappement (11) de la turbine (8) de la turbosoufflante à gaz d'échappement (9) pouvant être couplée est disposée une soupape de mise en circuit de la turbine (12) commandable après l'ouverture de laquelle une soupape de mise en circuit de compresseur (27) insérée dans la conduite d'air de suralimentation (26) du compresseur (16) de la turbosoufflante à gaz d'échappement (9) connectable peut s'ouvrir sous l'action de la pression qui s'établit dans cette conduite d'air de suralimentation; la soupape d'évacuation (14) et la soupape de mise en circuit de la turbine (12) pouvant être commandées par un appareil de commande électronique (31), en fonction de variables d'état du moteur à combustion interne captées par des détecteurs (19, 30, 34, 35), de sorte que, en mode de fonctionnement avec un seul compresseur à suralimentation, la soupape d'évacuation (14) est fermée et la soupape de mise en circuit de la turbine (12) soumise à une régulation en fonction de la pression de suralimentation, et que, en mode de fonctionnement avec deux compresseurs à suralimentation, la soupape de mise en circuit de la turbine (12) est ouverte et la soupape d'évacuation (14) soumise à une régulation en fonction de la pression de suralimentation; une valeur effective (m) mesurée étant comparée avec une valeur de consigne corrigée, et le second compresseur à suralimentation étant connecté ou déconnecté en conséquence, **caractérisé en ce que**

    a) un détecteur (19) est prévu pour la mesure du flux massique d'air (valeur effective m) amené au moteur à combustion interne;

    b) dans l'appareil de commande (31) est mémorisée comme valeur fixe une valeur de consigne ($m_s$) du flux massique d'air déterminée empiriquement à laquelle doit intervenir la commutation du fonctionnement avec un compresseur à suralimentation au fonctionnement avec deux compresseurs à suralimentation;

    c) la valeur de consigne ($m_s$) est corrigée par un premier facteur ($\Delta m_b$) dépendant de l'accélération et par un second facteur ($\Delta m_s$) dépendant de l'angle du clapet d'étranglement, et que

    d) le second compresseur à suralimentation (9) est mis en circuit lorsque la valeur effective mesurée dépasse la valeur de consigne corrigée, et déconnecté lorsque la valeur effective mesurée est inférieure à la valeur de consigne corrigée.

2. Moteur à combustion interne selon la revendication 1, caractérisé en ce que la conduite de pression de suralimentation (26) du compresseur (16) de la turbosoufflante à gaz d'échappement (9) pouvant être mis en circuit est reliée au côté aspiration de l'autre compresseur (5) par l'intermédiaire d'une soupape de reprise d'air (29) commandée par l'appareil de commande (31) de telle façon qu'elle est fermée lors du passage de mode de fonctionnement avec un seul compresseur à suralimentation au fonctionnement avec deux compresseurs à suralimentation.